## Europäisches Patentamt
## European Patent Office
## Office européen des brevets

(19)

(11) Numéro de publication: **0 165 127**
**B1**

(12) **FASCICULE DE BREVET EUROPÉEN**

(45) Date de publication du fascicule du brevet:
**29.04.87**

(51) Int. Cl.⁴: **B 65 G 15/14,** B 65 G 47/84

(21) Numéro de dépôt: **85400934.7**

(22) Date de dépôt: **13.05.85**

(54) **Dispositif d'éjection et d'évacuation automatiques de plusieurs rangées de récipients et machine de conditionnement équipée de ce dispositif.**

(30) Priorité: **16.05.84 FR 8407613**

(43) Date de publication de la demande:
**18.12.85 Bulletin 85/51**

(45) Mention de la délivrance du brevet:
**29.04.87 Bulletin 87/18**

(84) Etats contractants désignés:
**AT BE CH DE GB IT LI LU NL SE**

(56) Documents cité:
**DE-A-2 645 904**
**US-A-2 421 515**

(73) Titulaire: **E.P. REMY Et Cie., 50 avenue des Fenots, F-28104 Dreux (FR)**

(72) Inventeur: **Lemaire, Didier, Rue des Pinèdes Cherizy, F-28500 Vernouillet (FR)**

(74) Mandataire: **Durand, Yves Armand Louis, Cabinet Z. Weinstein 20, Avenue de Friedland, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

## Description

La présente invention a essentiellement pour objet un dispositif permettant l'éjection et l'évacuation automatiques de plusieurs rangées de récipients, tels que par exemple des gobelets. Un dispositif de ce genre est décrit dans le document DE-A-26 45 904.

Elle vise également les machines de conditionnement de récipients qui sont équipées du dispositif ci-dessus.

On connaît déjà des machines permettant le conditionnement automatique de récipients ou gobelets comprenant un convoyeur avec plaques transversales munies d'orifices pour recevoir les récipients, et au-dessus duquel sont prévus un poste d'alimentation du convoyeur en récipients vides, un poste de remplissage de ces récipients avec un produit alimentaire par exemple, un poste de fermeture de ces récipients au moyen d'opercules par exemple, et enfin un poste d'éjection et d'évacuation des récipients du convoyeur pour les soumettre à un traitement ultérieur, par exemple un emballage.

Jusqu'à présent, ces machines ont donné satisfaction, mais elles ne permettaient pas des cadences élevées en ce sens, qu'au niveau du poste d'éjection-évacuation des récipients, aucun moyen satisfaisant n'avait été proposé pour éjecter et évacuer plusieurs rangées de récipients.

Aussi, les machines actuellement connues ne traitaient les récipients que rangée après rangée puisqu'on pouvait seulement évacuer en bout de machine les rangées de récipients les unes après les autres.

Comme on le comprend, ceci constitue un inconvénient sérieux à partir du moment où l'on veut conditionner des récipients avec une cadence élevée, et, c'est pourquoi, la présente invention a pour but de remédier a cet inconvenient en proposant un nouveau dispositif d'éjection et d'évacuation de plusieurs rangées de récipients à la fois, sans risque de provoquer le renversement ou la chute des récipients, et cela en parfaite synchronisation avec les opérations précédentes d'alimentation en gobelets de la machine, de remplissage et de fermeture de ces gobelets sur plusieurs rangées à la fois.

Par rapport à l'état de la technique antérieure, reflété par le document cité ci-dessus qui décrit un dispositif d'éjection et d'évacuation automatiques d'au moins une rangée de récipients entraînés par un convoyeur avec plaques transversales munies d'orifices pour recevoir lesdits récipients, et du type comprenant des poussoirs agencés sous les plaques pour pousser vers le haut la rangée de récipients et l'extraire ainsi de la plaque, l'invention est caractérisé par au moins une paire de courroies sans fin juxtaposées et disposées au-dessus du convoyeur dans un plan sensiblement parallèle à celui-ci et suivant une orientation perpendiculaire à la direction longitudinale du convoyeur, ainsi que par des moyens de rapprochement et d'écartement d'au moins les brins en vis à vis des deux courroies pour permettre respectivement la préhension par pincement latéral de la rangée de récipients après éjection des plaques, et son relâchement, après transport entre lesdits brins, sur un moyen d'évacuation, tel que par exemple un tapis transporteur disposé orthogonalement au convoyeur précité.

Ainsi, comme on le comprend, la paire de courroies transversales au convoyeur joue le rôle d'une pince et d'un moyen de transport pour évacuer la rangée de récipients hors du convoyeur. Et, on peut parfaitement utiliser plusieurs paires de courroies pour évacuer de cette façon plusieurs rangées de récipients à la fois, ce qui serait impossible avec des moyens classiques de pinçage, car, dans ce cas là, on se heurterait nécessairement à des problèmes de détérioration, de renversement ou de chute des récipients.

Suivant une autre caractéristique de l'invention les moyens de rapprochement et d'écartement des courroies sans fin sont constitués par des guides agencés entre les deux brins de chaque courroie et actionnable par au moins un vérin suivant une direction parallèle à la direction longitudinale du convoyeur.

Dans le cas où l'on prévoit par exemple deux paires de courroies sans fin pour ainsi évacuer deux rangées de récipients simultanément, le guide de l'une des courroies de la première paire est attelé au guide de l'une des courroies de la deuxième paire et est actionné par un vérin, tandis que l'autre guide de l'autre courroie de la première paire est attelé au guide de l'autre courroie de la deuxième paire et est actionné par un deuxième vérin.

On pourra ainsi actionner simultanément les diverses courroies pour permettre la préhension et le relâchement de plusieurs rangées de répicients à évacuer.

Suivant une autre caractéristique de l'invention, chaque guide comporte deux bras sensiblement parallèles et susceptibles de prendre respectivement appui sur les deux brins de la courroie sans fin.

On ajoutera encore ici que chaque courroie sans fin est de préférence crantée sur son côté interne et est entraînée en rotation par deux poulies solidaires du dessous d'un plateau horizontal portant des moyens appropriés d'entraînement de ces poulies.

L'invention vise également une machine de conditionnement de récipients équipée d'un dispositif répondant à l'une ou l'autre des caractéristiques sus-mentionnées.

Mais d'autres caractéristiques et avantages de l'invention apparaîtront mieux dans la description détaillée qui suit et se réfère aux dessins schématiques annexés, donnés uniquement à titre d'exemple, et dans lesquels:

- la figure 1 est une vue très schématique en perspective d'un dispositif conforme aux principes de l'invention, et

- la figure 2 est une vue en plan de dessus, suivant la flèche II de la figure 1, de deux paires de courroies permettant la préhension et l'évacuation de deux rangées de récipients, le plateau sous lequel sont montées lesdites courroies ayant été enlevé pour plus de clarté.

En se reportant aux dessins annexés, on voit un convoyeur 1 essentiellement constitué par des plaques transversales 2 munies d'orifices 3 susceptibles de recevoir des récipients 4, lesquelles plaques sont solidaires par leurs extrémités de chaînes ou analogues 5 montées autour de roues dentées 6 reliées a un moyen d'entraînement approprié, comme cela est bien connu.

Sous le brin supérieur du convoyeur 1, c'est-à-dire sous les plaques 2, on voit deux rangées de doigts ou poussoirs verticaux 7 solidaires d'un support 6 qui peut être actionné verticalement au moyen d'un vérin 9 par exemple monté sur le bâti non représenté de la machine.

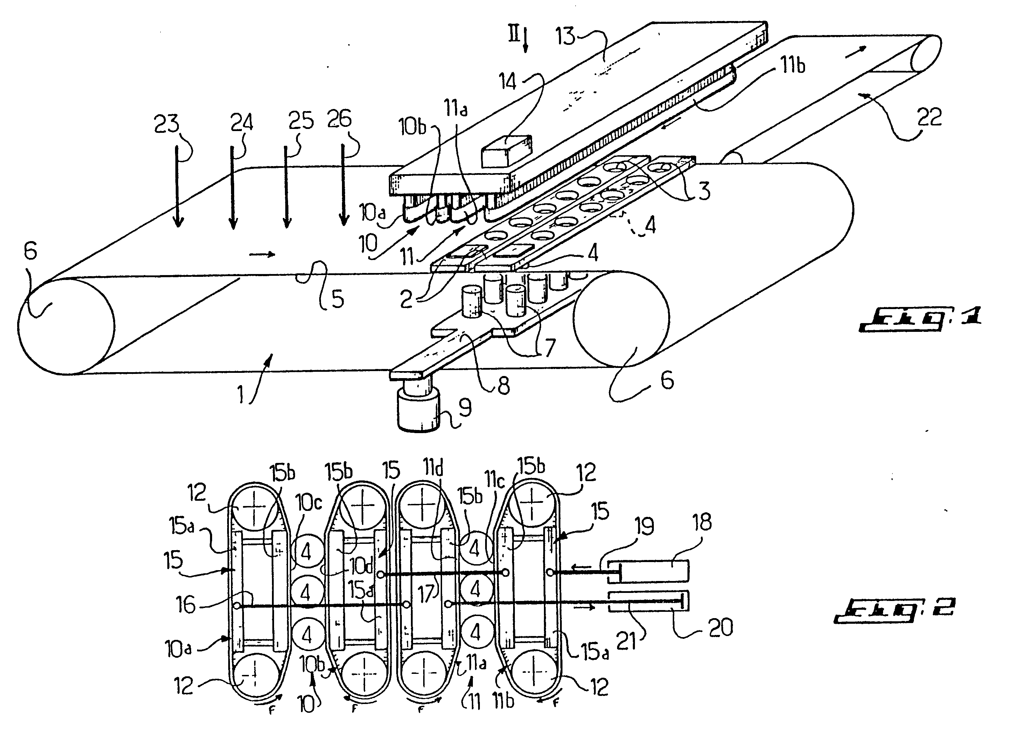

Suivant un exemple de réalisation, et conformément à l'invention, deux paires 10, 11 de courroies sans fin juxtaposées 10a, 10b et 11a, 11b sont disposés au-dessus du convoyeur 1 dans un plan sensiblement parallèle à celui-ci et suivant une orientation perpendiculaire à la direction longitudinale du convoyeur. plus précisément, chaque courroie 10a, 10b, 11a, 11b passe autour de deux poulies 12 qui sont solidaires du dessous d'un plateau horizontal 13 bien visible sur la figure 1, ledit plateau étant solidaire du bâti de la machine. On a montré très schématiquement en 14 sur la figure 1 un moyen d'entraînement, tel que par exemple un moteur electrique susceptible d'entraîner les poulies 12 et donc les courroies sans fin suivant les flèches repérées F sur la figure 2, étant entendu que de tels moyens d'entraînement n'ont pas à être décrits en détail puisqu'ils sont connus en soi.

Ainsi, comme on le voit bien sur la figure 2, les deux paires 10 et 11 de courroies définissent chacune, entre leurs brins en vis-à-vis un couloir pour les récipients 4.

On voit également sur la figure 2 que des moyens de rapprochement et d'écartement des brins en vis-à-vis 10c, 10d et 11c, 11d des courroies de chaque paire, sont prevus entre les deux brins de chaque courroie 10a, 10b, 11a, 11b, et revêtent la forme de guides 15. Plus précisément, chaque guide 15 est constitué de deux bras 15a, 15b qui sont solidaires et respectivement parallèles aux deux brins de la courroie.

Le guide associé à chaque courroie 10a, 10b, 11a, 11b est actionnable par un vérin suivant une direction parallèle au convoyeur 1, c'est-à-dire dans le plan de la figure 2, pour déformer les brins en vis-à-vis 10c, 10d et 11c, 11d de chaque paire de courroies 10 et 11.

Plus précisément, et suivant l'exemple de réalisation représenté, le guide 15 de la courroie 10a est attelé par une barre 16 au guide 15 de la courroie 11a, et le guide 15 de la courroie 10b est attelé par une autre barre 17 au guide 15 de la courroie 11b. Un premier vérin 18 actionne par sa tige 19 le guide 15 associé à la courroie 11b, et un deuxième vérin 20 actionne par sa tige 21 le guide 15 associé à la courroie 11a. Ainsi, chaque vérin 18, 20 peut actionner deux guides 15 associés respectivement à l'une des courroies des deux paires de courroies. Autrement dit, une poussée sur la tige 19 du vérin 18 provoquera, comme on le voit sur la figure 2, une poussée vers la gauche des brins 11c et 10d des courroies 11b et 10b, et une traction simultanée de la tige 21 du vérin 20 provoquera une poussée vers la droite des brins 11d et 10c des courroies 11a et 10a. Ceci veut donc dire que le couloir entre chaque paire de courroies 10 et 11 se reserrera pour saisir les récipients 4, étant bien entendu qu'un actionnement des vérins 18 et 20 inverse de celui décrit précédemment, provoquera l'écartement des brins en vis-à-vis de chaque paire de courroies, c'est-à-dire un relâchement des récipients 4.

Ce relâchement est effectué au-dessus d'un tapis transporteur 22 bien visible sur la figure 1 et qui est disposé orthogonalement au convoyeur 1, puisque les deux paires de courroies 10 et 11, lorsqu'elles sont entraînées, évacuent les gobelets 4 perpendiculairement audit convoyeur.

Le fonctionnement du dispositif de l'invention se déduit immédiatement de la description qui précède et sera très brièvement décrit ci-après.

On a montré schématiquement par des flèches sur la figure 1 différents postes de traitement agencés au-dessus du convoyeur 1, et à savoir un poste 23 d'alimentation des plaques 2 en récipients vides, un poste 24 de remplissage de ces récipients avec un produit alimentaire par exemple, un poste 25 de dépose d'opercules sur les récipients, et un poste 26 de soudage des opercules sur les récipients pour les obturer. Après ces diverses opérations, les rangées de récipients parviennent au dispositif conforme à l'invention, c'est-à-dire au-dessous des paires de courroies 10 et 11. Dès lors, les deux rangées de poussoirs 7 sont actionnées vers le haut et poussent le dessous des récipients pour les extraire des plaques 2. Les deux rangées de récipients éjectés pénètrent alors dans les deux couloirs définis par les deux paires de courroies 10 et 11 dont les brins en vis-à-vis sont écartés. En agissant sur les vérins 18 et 20, les brins 10c, 10d et 11c, 11d se rapprochent pour pincer latéralement les deux rangées de récipients, et l'entraînement des courroies suivant les flèches F assure le transport des deux rangées de récipients perpendiculairement au convoyeur 1 et au-dessus du tapis transporteur 22 où les deux rangées de récipients sont déposées grâce à un nouvel actionnement des vérins 18 et 20, en sens inverse de l'actionnement précédent, de façon à écarter les brins en vis-à-vis des deux paires de courroies.

La séquence des opérations ci-dessus s'effectue évidemment automatiquement et en synchronisme parfait avec toutes les opérations précédentes de conditionnement aux postes 23, 24, 25 et 26.

On a donc réalisé suivant l'invention un dispositif d'éjection et d'évacuation automatiques de gobelets qui peut avantageusement équiper une machine de conditionnement permettant le traitement de plusieurs rangées à la fois de récipients, c'est-à-dire permettant des cadences très élevées de conditionnement, ce qui est aujourd'hui impératif dans l'industrie alimentaire.

Bien entendu, l'invention n'est nullement limitée au mode de réalisation décrit et illustré qui n'a été donné qu'à titre d'exemple.

C'est ainsi que le dispositif de l'invention peut permettre l'éjection et l'évacuation de plus de deux rangées de gobelets. De même la forme et l'actionnement des guides associés à chaque courroie pourraient être différents sans sortir du cadre de l'invention, cela étant notamment fonction du nombre de rangées de gobelets que l'on veut traiter.

## Revendications

1.- Dispositif d'éjection et d'évacuation automatiques d'au moins une rangée de récipients (4) entraînés par un convoyeur (1) avec plaques transversales (2) munies d'orifices (3) pour recevoir lesdits récipients (4), et du type comprenant des poussoirs (7) agencés sous les plaques (2) pour pousser vers le haut la rangée de récipients (4) et l'extraire ainsi de la plaque (2), caractérisé par au moins une paire de courroies (10a, 10b) sans fin juxtaposées et disposées au-dessus du convoyeur (1) dans un plan sensiblement parallèle à celui-ci et suivant une orientation perpendiculaire à la direction longitudinale du convoyeur, ainsi que par des moyens (10c, 10d) de rapprochement et d'écartement d'au moins les brins en vis-à-vis des deux courroies (10a, 10b) pour permettre respectivement la préhension par pincement latéral de la rangée de récipients (4) après éjection des plaques, et son relâchement, après transport entre lesdits brins, sur un moyen d'évacuation (22), tel que par exemple un tapis transporteur, disposé orthogonalement au convoyeur (1) précité.

2.- Dispositif selon la revendication 1, caractérisé en ce que les moyens (10c, 10d) de rapprochement et d'écartement précités sont constitués par des guides (15) agencés entre les deux brins de chaque courroie et actionnables par au moins un vérin suivant une direction parallèle à la direction longitudinale du convoyeur.

3.- Dispositif selon la revendication 1 ou 2, caractérisé en ce que dans le cas où l'on prévoit deux paires de courroies (10a, 10b, 11a, 11b) sans fin pour ainsi évacuer deux rangées de récipients simultanément, le guide de l'une des courroies de la première paire est attelé au guide de l'une des courroies de la deuxième paire et est actionné par un vérin (18), tandis que l'autre guide de l'autre courroie de la première paire est attelé au guide de l'autre courroie de la deuxième paire et est actionné par un deuxième vérin (20).

4.- Dispositif selon la revendication 2 ou 3, caractérisé en ce que chaque guide compte deux bras (15a, 15b) sensiblement parallèles et susceptibles de prendre respectivement appui sur les deux brins de la courroie sans fin.

5.- Dispositif selon l'une des revendications précédentes, caractérisé en ce que chaque courroie sans fin est crantée sur son côté interne et est entraînée en rotation par deux poulies (12) solidaires du dessous d'un plateau horizontal portant des moyens appropriés d'entraînement de ces poulies.

6.- Machine de conditionnement de récipients comprenant notamment un convoyeur (1) à plaques transversales susceptibles de recevoir des rangées de récipients tels que des gobelets et au-dessus duquel sont successivement prévus un poste d'alimentation en récipients, au moins un poste de remplissage et au moins un poste de fermeture des récipients, caractérisée en ce qu'elle est équipée d'un dispositif d'éjection et d'évacuation des récipients (4), conditionnés selon l'une des revendications 1 à 5.

## Patentansprüche

1. Vorrichtung zum automatischen Ausstossen und Evakuieren wenigstens einer Reihe von Behältern (4),die durch einen Förderer (1), der mit Öffnungen (3) zur Aufnahme der besagten Behälter (4) versehene Querplatten besitzt, mitgenommen werden, mit Vordrücke (7), die unter den Platten (2) zum Hinaufschieben und somit zu Ausgabe der Behälterreihe (4) aus der Platte (2) angebracht sind, gekennzeichnet durch wenigstens ein Paar nebeneinanderliegender und über dem Förderer (1) in einer im wesentlichen zum Förderer parallelen Ebene senkrecht zu der Längsrichtung desselben angeordneter endloser Treibriemen (10a, 10b) sowie durch Mittel zum Zusammenrücken und Auseinanderrücken wenigstens der gegenüberliegenden Stränge beider Riemen (10a, 10b), um das Ergreifen der Behälterreihe (4) durch Seitenklemmen nach dem Ausstossen der Platten bzw. deren Freigabe nach Förderung zwischen den besagten Strängen auf einem Evakuierungsmittel (22) wie z.B. einem zu dem vorgenannten Förderer (1) rechtwinklig angeordneten Förderband zu ermöglichen.

2. Vorrichtung nach Anspruch 1, dadurch gekennzeichnet, dass die vorgenannten Mittel zum Zusammen-und Auseinanderrücken aus zwischen den beiden Strängen angebrachten Führungen (15) gebildet werden, die durch wenigstens einen Hubzylinder entlang einer der Längsrichtung des Förderers parallelen Richtung betätigbar sind.

3. Vorrichtung nach Anspruch 1 oder 2, dadurch gekennzeichnet, dass falls zwei Paare endloser Treibriemen (10a, 10b, 11a, 11b) zum gleichzeitigen Evakuieren zweier Behälterreihen vorgesehen sind, die Führung der Riemen des ersten Paares mit der Führung eines der Riemen des zweiten Paares gekuppelt ist und durch einen Hubzylinder (18) betätigt wird, während die andere Führung des anderen Riemens des ersten Paares mit der Führung des anderen Riemens des zweiten Paares gekuppelt ist und durch einen zweiten Hubzylinder (20) betätigt wird.

4. Vorrichtung nach Anspruch 2 oder 3, dadurch gekennzeichnet, dass jede Führung zwei im wesentlichen parallele Arme (15a, 15b) besitzt, die dazu fähig sind, sich jeweils auf den beiden Strängen des endlosen Riemens abzustützen.

5. Vorrichtung nach einem der vorangehenden Ansprüche, dadurch gekennzeichnet, dass jeder endlose Riemen an seiner inneren Seite mit Rasten versehen ist und durch zwei wirkverbundene Rollen (12) gedreht wird, die mit dem Unterteil einer horizontalen Tafel fest verbunden sind, die zum Antrieb dieser Rollen geeignete Mittel besitzt.

6. Maschine zur Verpackung von Behältern mit insbesondere einem Förderer (1) mit Querplatten, die dazu fähig sind, Reihen von Behältern wie z.B. Becher aufzunehmen und über dem nacheinander eine Behälterversorgungsstelle, wenigstens eine Füllstelle und wenigstens eine Behälterverschlusstelle vorgesehen sind, dadurch gekennzeichnet, dass sie wenigstens mit einer Ausstoss-und Evakuiervorrichtung für die nach einem der Ansprüche 1 bis 5 behandelten Behälter (4) ausgerüstet ist.

**Claims**

1. Device for automatically ejecting and removing at least one row of receptacles (4) carried along by a conveyor (1) with transverse plates (2) provided with openings (3) to receive the said receptacles (4) and of the kind comprising thrusters (7) arranged under the plates (2) to thrust the row of receptacles (4) upwards and thus extract it from the plate (2), characterized by at least one pair of juxtaposed endless belts (10a, 10b) located above the conveyor (1) in a plane substantially parallel thereto and along an orientation perpendicular to the longitudinal direction of the conveyor and by means (10c, 10d) for bringing near and moving apart at least the opposite sides of both belts (10a, 10b) in order to respectively allow gripping the row of receptacles (4) by side pinching after the plates (4) are ejected and the release thereof, after transportation between the said sides, on a removing means (22) such as a carrier belt arranged at right angles to the afore said conveyor (1).

2. Device according to claim 1, characterized in that the afore said bringing near and moving apart means (10c, 10d) are formed of guides (15) arranged between both sides of each belt and operable by at least one jack along a direction parallel to the longitudinal direction of the conveyor.

3. Device according to claim 1 or 2, characterized in that, when two pairs of endless belts (10a, 10b, 11a, 11b) are provided so as to remove two rows of receptacles simultaneously, the guide of one of the belts of the first pair is coupled to the guide of one of the belts of the second pair and is operated by a jack (18) while the other guide of the other belt of the first pair is coupled to the guide of the other belt of the second pair and is operated by a second jack (20).

.4. Device according to claim 2 or 3, characterized in that each guide has two substantially parallel arms (15a, 15b) each one liable to take its bearing on both sides of the endless belt.

5. Device according to one of the previous claims, characterized in that each endless belt is indexed on its inner side and is rotated by two pulleys (12) associated with the underside of a horizontal plate bearing suitable driving means for these pulleys.

6. Machine for packaging receptacles, notably comprising a conveyor (1) with transverse plates liable to receive rows of receptacles such as beakers and above which a receptacle-feeding station, at least one filling station and at least one receptacle-sealing station are successively provided, characterized in that it is fitted with a device for ejecting and removing the packaged receptacles according to one of claims 1 to 5.

Fig. 1

Fig. 2